# EUROPEAN PATENT SPECIFICATION

(11) **EP 2 937 613 B1**
(45) Date of publication and mention of the grant of the patent: **13.11.2019**
(21) Application number: 14193915.7
(22) Date of filing: 19.11.2014
(51) Int. Cl.: F16L 37/084, F16L 37/12

(54) **Coupling Assembly for a water supply and a plug therefor**
Kupplungsanordnung für eine Wasserversorgung und Stopfen dafür
Ensemble de couplage pour une alimentation en eau et bouchon associé

(30) Priority: 12.12.2013 GB 201321969
(43) Date of publication of application: 28.10.2015
(73) Proprietor: Munster Simms Engineering Limited, Bangor County Down BT19 1LT (GB)
(72) Inventor: Peoples, Andrew, Drumahoe, County Londonderry BT47 3BF (GB)
(74) Representative: FRKelly

(56) References cited:
- WO-A1-02/093061
- US-A- 4 116 476
- US-A- 5 967 563

## Description

### Field of the Invention

The present invention relates to a coupling assembly for a water supply. The invention relates particularly, but not exclusively, to coupling assemblies for supplying water to mobile dwellings, such as caravans, mobile homes and recreational vehicles.

### Background to the Invention

It is known to supply water to a mobile dwelling, such as a caravan, mobile home or recreational vehicle, from an external source via a water supply pipe connectable to the plumbing of the mobile dwelling via an externally accessible coupling assembly. The coupling assembly typically comprises a socket provided on or below a wall of the mobile dwelling and a cooperating plug having a spigot adapted to be inserted into a cooperating receiving aperture in the socket to enable fluid communication between the water supply pipe and the plumbing of the mobile dwelling. A distal end of the water supply pipe, remote from the plug, may be coupled to a mains water supply or may be submerged in water contained in a portable vessel or reservoir. Where water is supplied to the mobile dwelling from a portable vessel or reservoir it is known to provide an electrically powered submersible pump at said distal end of the water supply pipe. In such cases, the coupling assembly may be incorporate electrical connectors to supply electrical current to the pump from an electricity supply within the mobile dwelling, such as a battery, via the coupling assembly.

It is desirable for the coupling assembly to incorporate a releasable locking mechanism, whereby the spigot can be reliably retained within the receiving aperture in the socket once inserted therein, thus avoiding leakages and preventing the plug from falling out of the socket during use while permitting the plug to be readily detached from the socket, by manipulation of the locking mechanism, when desired. Prior art locking mechanisms, such as that provided on the Truma Ultraflow system, typically comprise a pivotally mounted latch mounted on a side of the plug, the latch being spring biased into a locking position, a catch being provided at one end of the latch shaped to engage a recess provided on a flange of the socket when the latch is in its locking position. An opposite end of the latch defines a trigger which can be depressed by the user to release the catch from the recess and enable the plug to be withdrawn from the socket. However, such known latches are prone to damage due to their exposed location on a lower side of the plug and can be awkward to manipulate.

US 4,116,476 discloses a quick disconnect coupler assembly for supplying two different fluids by separate hoses. WO 02/093061 discloses a rapid coupling for connecting breathable air to a mask.

It is an object of the present invention to provide an improved coupling assembly which enables robust and reliable coupling of a water supply pipe to the plumbing of a mobile dwelling with reduced risk of leakage or damage compared to prior art solutions.

### Summary of the Invention

A first aspect of the invention provides a plug as claimed in claim 1.

Preferred features are recited in the dependent claims.

Further advantageous aspects of the invention will become apparent to those ordinarily skilled in the art upon review of the following description of a specific embodiment and with reference to the accompanying drawings.

### Brief Description of the Drawings

An embodiment of the invention is now described by way of example and with reference to the accompanying drawings in which:

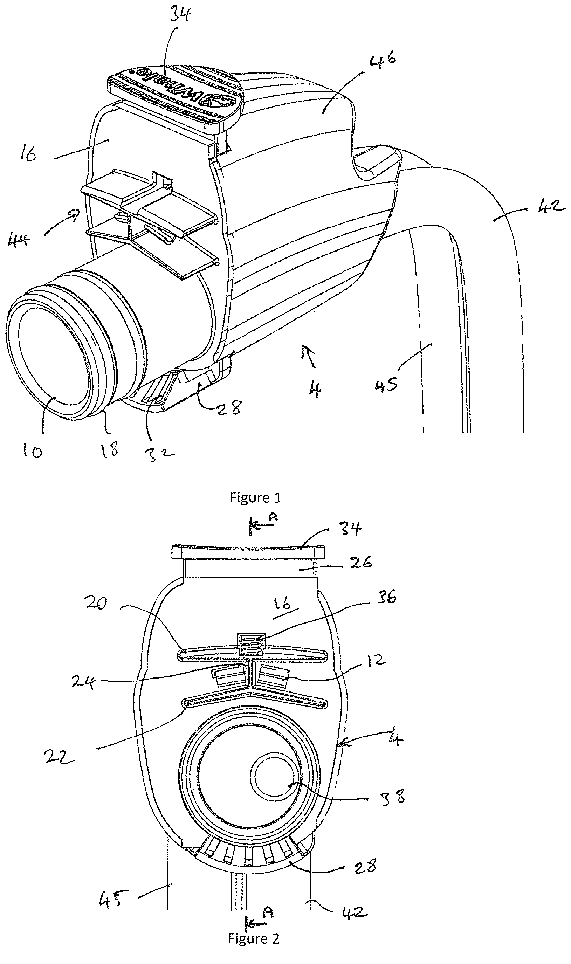

Figure 1 is a perspective view of the plug of a coupling assembly in accordance with an embodiment of the present invention;
Figure 2 is a front view of the plug of Figure 1;

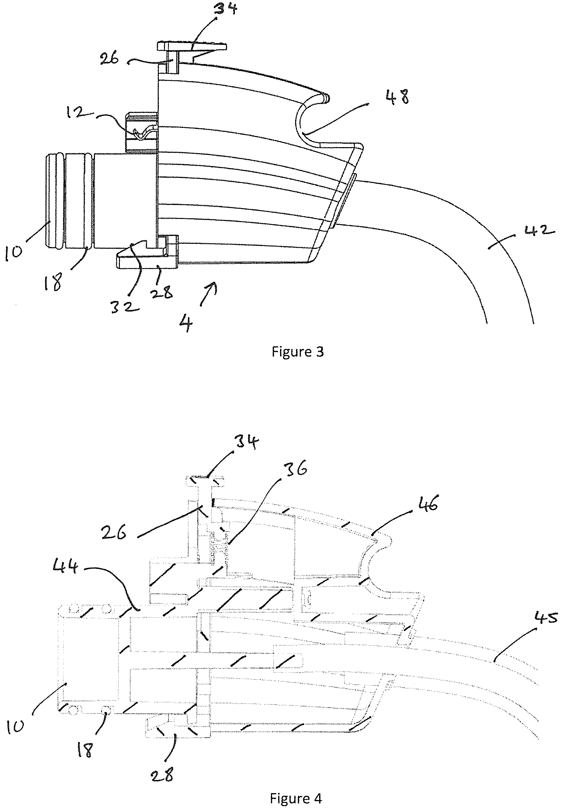

Figure 3 is a side view of the plug of Figure 1;
Figure 4 is a longitudinal sectional view of the plug of Figure 1 along line A-A of Figure 2;
Figure 5 is a side view of the coupling assembly according to an embodiment of the present invention showing insertion of the plug into the socket;
Figure 6 is a side view of the coupling assembly of Figure 5 with the plug inserted into the socket; and
Figure 7 is a side view of the coupling assembly of Figure 5 showing release of the latch mechanism to enable removal of the plug from the socket.

### Detailed Description of the Drawings

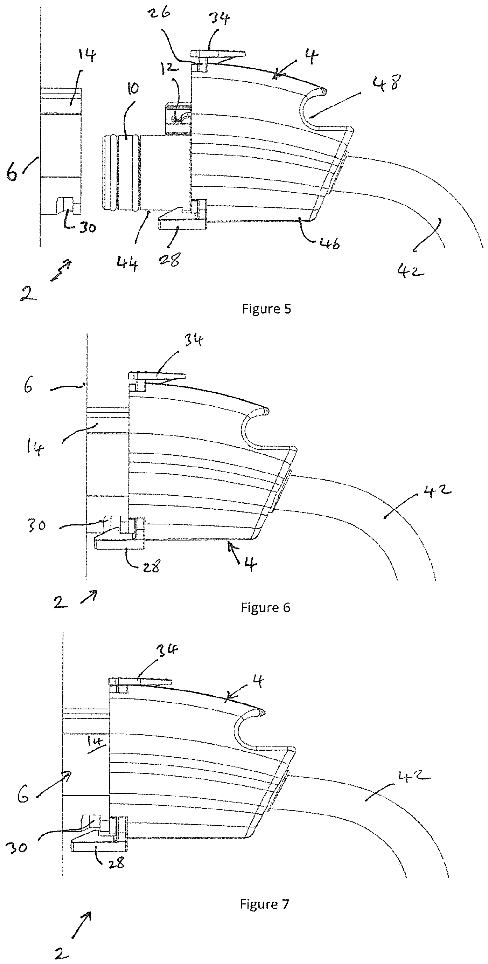

Referring now to the drawings, in particular Figures 5 to 7, there is shown generally indicated as 2 a coupling assembly embodying the invention for coupling a water supply to a mobile dwelling, such as a caravan, mobile home or recreational vehicle. The coupling assembly 2 comprises a plug 4 and a cooperating socket 6.

The socket 6 is adapted to be mounted in an externally accessible location on the mobile dwelling, such as in or below an external wall thereof. The socket 6 includes a receiving aperture (not shown) for receiving a spigot 10 of the plug 4, the receiving aperture communicating with the plumbing of the mobile dwelling for supplying water to appliances within the mobile dwelling, such as taps, a shower and other sanitary fittings.

The plug 4 and socket 6 also incorporates cooperating electrical connectors 12 for supplying electrical current between the mobile dwelling and an external device or power source via the coupling assembly, in particular for supplying electrical current to a submersible water pump located at a distal end of the water supply pipe upon which the plug is mounted.

The socket 6 includes a peripheral flange 14 delimiting a region within which the plug 4 is located when coupled to the socket 6.

The plug 4 comprising an elongate body having a front face 16 from which the spigot 10 extends. Sealing "O" rings 18 are provided in respective annular grooves defined around the periphery of the spigot 10 to provide a watertight seal against the receiving aperture of the socket 6. The front face 16 of the plug 4 may be dimensioned to be received within a space bounded by the peripheral flange 14 of the socket 6.

A pair of spaced substantially horizontally arranged apart walls 20,22 extend from the front face 16 of the body of the plug 4, at a location above the spigot 10, a substantially vertically arranged adjoining central wall 24 extending therebetween. The electrical connectors 12 may be provided between the spaced apart walls 20,22 on either side of the central adjoining wall 24 in a position adapted to cooperate with corresponding electrical connectors provided in the socket 6.

The plug 4 is securable in the socket 6 by means latch mechanism comprising a one piece elongate latch member 26 formed from a resilient material, preferably plastics, said latch member 26 extending through the body of the plug 4 in a position behind the front face 16 of the body of the plug 4, transverse to the spigot 10.

A hook-shaped catch 28 is formed at a lower end of the latch member 26 extending forwardly from the body of the plug 4, the catch 28 being adapted to engage an annular recess 30 formed in a lower edge of the peripheral flange 14 of the socket 6 to retain the plug 4 in engagement with the socket 6 when the spigot 10 is inserted into the receiving aperture. An outer face 32 of the catch 28 is tapered to define a ramped surface shaped to guide the catch 28 over the peripheral flange 14 of the socket 6, urging the catch away from its operative position as the spigot 10 of the plug 4 is inserted into the receiving aperture 8 of the socket 6.

An operating button 34 is provided at an upper end of the latch member 26, extending upwardly from the body of the plug 4. A spring 36, or similar resilient biasing means, acts against the latch member 26 to bias the latch member 26 to a raised or operative position wherein the catch 28 engages the recess 30 in the peripheral flange 14 of the socket 6, the operating button 34 being positioned to be depressed by the user's thumb when the user grips the body of the plug 4 to push the latch member 26 to a lower or retracted position, against the spring 36 whereby the catch 28 is displaced downwardly to disengage the catch 28 from the annular recess 30 in the flange 14 of the socket 6.

A tubular water supply passageway 38 extends through the body of the plug 4, communicating with and extending rearwardly from the spigot 10 and terminating in a stub (not shown) to which a water supply conduit 42 may be attached. A further conduit 45 may be provided, alongside the water supply conduit 42, for receiving wires connected to the electrical connectors 12 provided on the front face 16 of the plug 4, such that the wires may supply electrical current to submersible pump (not shown) provided at a distal end of the water supply conduit.

The body of the plug 4 is formed from two parts, a front part 44 comprising the front face 16 of the plug 4, having the spigot 10 integrally formed thereon and having the electrical connectors 12 mounted therein, and a rear part 46. The latch member 26 is located between the front and rear parts 44,46, within guide channels provided therebetween. Preferably the latch member 26 incorporates a central opening, defined between a pair of elongate side ribs defining a central portion of the latch member, through which opening the water supply passageway 38 passes, such that elongate side ribs of the latch member 26 are located on either side of the passageway 38.

A cylindrical recess 48 is provided on a rear face of the plug 4, dimensioned to receive the conduit 44 so that the conduit may be supported on the plug when not in use to keep the free end of the conduit 44 off the ground.

In use, when it is desired to connect a mobile dwelling to a water supply, the plug 4 is engaged with the socket 6, inserting the spigot 10 of the plug 4 into the receiving aperture of the socket. As the spigot 10 enters the receiving aperture, the catch 28 engages the flange 14 and the sloping face 32 of the catch 28 rides over the flange 14, urging the latch member towards is lower retracted position, allowing the spigot 10 to enter the receiving aperture. Once the plug is fully inserted into the socket, the catch 28 is able to move into engagement with the recess 30 in the lower face of the flange 14 under the action of the spring 36, locking the plug 4 into position within the socket 6, as shown in Figure 6.

When it is desired to detach the plug 4 from the socket 6, the user may grasp the plug 4, depressing the operating button 34 on the upper side of the plug 4 with the user's thumb to displace the latch member 26 to its lower retracted position, moving the catch 28 out of engagement with the recess 30 of the flange 30. At the same time the user can pull the plug 4 out of the socket 6, withdrawing the spigot 10 of the plug 4 from the receiving aperture of the socket 6.

## Claims

1. A plug (4) suitable for attachment to a socket (6), the plug (4) comprising a passageway (38) extending through a body of the plug, the body incorporating a spigot (10) suitable for insertion into a receiving aperture of the socket (6), the spigot (10) communicating with the passageway (38) of the plug (4), a latch member (26) being provided on the body comprising a catch (28) suitable for engaging a portion of the socket (6) to retain the plug (4) within the socket (6), the catch (28) being displaceable between an operative position, wherein the catch (28) may engage said portion of the socket (6) to retain the plug within the socket, and a retracted position, to permit removal of the plug (4) from the socket (6), biasing means (36) engaging the latch member (26) to bias the catch (28) towards its operative position, the latch member (26) including an operating button (34) operable to displace the catch (28) to its retracted position against the action of the biasing means (36), wherein the latch member (26) comprises a one piece component extending through the body of the plug (4) in a direction transverse to the axis of said passageway (38), whereby said catch (28) is located at one end of the latch member (26) on a lower side of the plug (4) while said button is located at an opposite end of the latch member (26) on an upper side of the plug (4) such that the latch member (26) is moveable in a vertical axis extending transverse to the passageway (38) to displace the catch (28) between its operative and retracted positions, wherein the plug incorporates electrical connectors (12) adapted to cooperate with electrical connectors of the socket (6) for supplying electrical current via a coupling assembly between the socket (6) and the plug (4), wherein the plug (4) is formed from two parts (44,46), a front part (44) comprising a front face (16) of the plug (4), having the spigot (10) integrally formed thereon and having the electrical connectors (12) mounted therein, and a rear part (46), the latch member (26) being located within one or more guide channels defined between said two parts (44,46), the spigot (10) extending from the front face (16),
**characterized in that** the electrical connectors (12) are provided on the front face (16).

2. A plug as claimed in claim 1 wherein the passageway (38) terminates in a stub suitable for connection to a conduit.

3. A plug as claimed in any of claims 1 to 2 wherein the catch (28) extends forwardly from a first end of the latch member (26), the catch (28) having a hook-shaped forward portion adapted to engage a portion of the socket (6).

4. A plug as claimed in claim 3 wherein an outer face (32) of the catch (28) is tapered or sloping to guide the catch (28) over a flange of the socket (6) as the plug (4) is inserted into the socket (6).

5. A plug as claimed in any of claims 1 to 4 the latch member (26) incorporates an opening or gap therein through which the passageway (38) passes.

6. A coupling assembly (2) suitable for a water supply, said coupling assembly comprising a plug (4) as claimed in any preceding claim and a socket (6), said plug (4) being receivable within said socket (6), said plug and socket having respective slidably inter-engageable male and female parts, a receiving aperture provided on the socket (6) for receiving the spigot (10) of the plug (4) when the plug (4) is engaged with the socket (6), the latch member (26) being moveable between its operative and retracted positions in a direction transverse to the direction of engagement of the spigot (10) with the receiving aperture, the catch (28) of the latch member (26) of the plug (4) being adapted to engage an edge of a flange (14) provided on the socket (6) to retain the spigot (4) within the receiving aperture, wherein the catch (28) engages the flange (14) of the socket (6) to retain the plug (4) within the socket (6) when the latch member (26) is in its operative position, and wherein the catch (28) is spaced from the flange (14) of the socket (6) to permit removal of the plug (4) from the socket (6) when the latch member (26) is in its retracted position.

7. A coupling assembly as claimed in claim 6, wherein the biasing means comprises a spring (36).

## Patentansprüche

1. Stecker (4), der zum Anbringen an einer Buchse (6) geeignet ist, wobei der Stecker (4) einen sich durch einen Körper des Steckers erstreckenden Durchgang (38) umfasst, wobei der Körper einen Auslaufzapfen (10) beinhaltet, der zum Einstecken in eine Aufnahmeöffnung der Buchse (6) geeignet ist, wobei der Auslaufzapfen (10) mit dem Durchgang (38) des Steckers (4) in Verbindung steht, wobei ein Verriegelungselement (26) an dem Körper vorgesehen ist, das einen Riegel (28) umfasst, der für den Eingriff mit einem Abschnitt der Buchse (6), um den Stecker (4) in der Buchse (6) zu halten, geeignet ist, wobei der Riegel (28) zwischen einer wirksamen Stellung, in der der sich der Riegel (28) mit dem Abschnitt der Buchse (6) im Eingriff befinden kann, um den Stecker in der Buchse zu halten, und einer eingezogenen Stellung, um das Entfernen des Steckers (4) aus der Buchse (6) zu ermöglichen, verschiebbar ist, wobei sich ein Vorbelastungsmittel (36) mit dem Verriegelungselement (26) im Eingriff befindet, um den Riegel (28) in Richtung seiner wirksamen Stellung vorzubelasten, wobei das Verriegelungselement (26) eine Betätigungstaste (34) umfasst, die wirksam ist, um den Riegel (28) gegen die Wirkung des Vorbelastungsmittels (36) in seine eingezogene Stellung zu verschieben, wobei das Verriegelungselement (26) eine einstückige Komponente umfasst, die sich durch den Körper des Steckers (4) in einer Richtung quer zu der Achse des Durchgangs (38) erstreckt, wodurch sich der Riegel (28) an einem Ende des Verriegelungselements (26) auf einer unteren Seite des Steckers (4) befindet, während sich die Taste an einem gegenüberliegenden Ende des Verriegelungselements (26) auf einer oberen Seite des Steckers (4) befindet, sodass das Verriegelungselement (26) in einer sich quer zu dem Durchgang (38) erstreckenden vertikalen Achse bewegbar ist, um den Riegel (28) zwischen seiner wirksamen und seiner eingezogenen Stellung zu verschieben, wobei der Stecker elektrische Verbinder (12) beinhaltet, die dazu angepasst sind, mit elektrischen Verbindern der Buchse (6) zusammenzuwirken, um elektrischen Strom über eine Kupplungsanordnung zwischen der Buchse (6) und dem Stecker (4) zuzuführen, wobei der Stecker (4) aus zwei Teilen (44, 46) gebildet ist, einem vorderen Teil (44), der eine Stirnfläche (16) des Steckers (4), an der der Auslaufzapfen (10) integriert gebildet ist und in der die elektrischen Verbinder (12) montiert sind, umfasst, und einen hinterem Teil (46), wobei sich das Verriegelungselement (26) in einer oder mehreren Führungsnuten befindet, die zwischen den zwei Teilen (44, 46) definiert sind, wobei sich der Auslaufzapfen (10) von der Stirnfläche (16) erstreckt, **dadurch gekennzeichnet, dass** die elektrischen Verbinder (12) an der Stirnfläche (16) vorgesehen sind.

2. Stecker nach Anspruch 1, wobei der Durchgang (38) in einem Stutzen endet, der zur Verbindung mit einer Leitung geeignet ist.

3. Stecker nach einem der Ansprüche 1 bis 2, wobei sich der Riegel (28) von einem ersten Ende des Verriegelungselements (26) nach vorne erstreckt, wobei der Riegel (28) einen hakenförmigen vorderen Abschnitt aufweist, der für den Eingriff mit einem Abschnitt der Buchse (6) angepasst ist.

4. Stecker nach Anspruch 3, wobei eine Außenfläche (32) des Riegels (28) verjüngt oder schräg ist, um den Riegel (28) über einen Flansch der Buchse (6) zu führen, wenn der Stecker (4) in die Buchse (6) eingesteckt wird.

5. Stecker nach einem der Ansprüche 1 bis 4, wobei das Verriegelungselement (26) ein Loch oder eine Aussparung darin beinhaltet, durch das bzw. die der Durchgang (38) verläuft.

6. Kupplungsanordnung (2), die für eine Wasserversorgung geeignet ist, wobei die Kupplungsanordnung einen Stecker (4) nach einem der vorangehenden Ansprüche und eine Buchse (6) umfasst, wobei der Stecker (4) in der Buchse (6) aufgenommen werden kann, wobei der Stecker und die Buchse jeweilige Steck- bzw. Aufnahmeteile aufweisen, die schiebbar miteinander in Eingriff gelangen können, wobei eine Aufnahmeöffnung an der Buchse (6) vorgesehen ist, um den Auslaufzapfen (10) des Steckers (4) aufzunehmen, wenn sich der Stecker (4) mit der Buchse (6) im Eingriff befindet, wobei das Verriegelungselement (26) zwischen seiner wirksamen und seiner eingezogenen Stellung in einer Richtung quer zu der Richtung des Eingriffs des Auslaufzapfens (10) mit der Aufnahmeöffnung bewegbar ist, wobei der Riegel (28) des Verriegelungselements (26) des Steckers (4) für den Eingriff mit einem Rand eines an der Buchse (6) vorgesehenen Flanschs (14) angepasst ist, um den Auslaufzapfen (4) in der Aufnahmeöffnung zu halten, wobei sich der Riegel (28) mit dem Flansch (14) der Buchse (6) im Eingriff befindet, um den Stecker (4) in der Buchse (6) zu halten, wenn sich das Verriegelungselement (26) in seiner wirksamen Stellung befindet, und wobei der Riegel (28) von dem Flansch (14) der Buchse (6) beabstandet ist, um das Entfernen des Steckers (4) aus der Buchse (6) zu ermöglichen, wenn sich das Verriegelungselement (26) in seiner eingezogenen Stellung befindet.

7. Kupplungsanordnung nach Anspruch 6, wobei das Vorbelastungsmittel eine Feder (36) umfasst.

## Revendications

1. Bouchon (4) approprié à des fins d'attache sur une emboîture (6), le bouchon (4) comportant une voie de passage (38) s'étendant au travers d'un corps du bouchon, le corps incorporant un bout mâle (10) approprié à des fins d'insertion dans une ouverture de réception de l'emboîture (6), le bout mâle (10) communiquant avec la voie de passage (38) du bouchon (4), un élément de verrouillage (26) mis en œuvre sur le corps comportant un cliquet (28) approprié à des fins de mise en prise d'une partie de l'emboîture (6) pour retenir le bouchon (4) à l'intérieur de l'emboîture (6), le cliquet (28) étant en mesure de se déplacer entre une position de fonctionnement, dans laquelle le cliquet (28) peut se mettre en prise avec ladite partie de l'emboîture (6) pour retenir le bouchon à l'intérieur de l'emboîture, et une position rétractée, pour permettre le retrait du bouchon (4) en provenance de l'emboîture (6), un moyen de sollicitation (36) se mettant en prise avec l'élément de verrouillage (26) pour solliciter le cliquet (28) vers sa position de fonctionnement, l'élément de verrouillage (26) comprenant un bouton de fonctionnement (34) servant à déplacer le cliquet (28) jusque sur sa position rétractée contre l'action du moyen de sollicitation (36), dans lequel l'élément de verrouillage (26) comporte un composant monobloc s'étendant au travers du corps du bouchon (4) dans une direction transversale par rapport à l'axe de ladite voie de passage (38), ce par quoi ledit cliquet (28) est situé au niveau d'une extrémité de l'élément de verrouillage (26) sur un côté inférieur du bouchon (4) alors que ledit bouton est situé au niveau d'une extrémité opposée de l'élément de verrouillage (26) sur un côté supérieur du bouchon (4) de telle sorte que l'élément de verrouillage (26) est en mesure d'être mobile dans un axe vertical s'étendant de manière transversale par rapport à la voie de passage (38) pour déplacer le cliquet (28) entre ses positions de fonctionnement et rétractée, dans lequel le bouchon incorpore des connecteurs électriques (12) adaptés pour coopérer avec des connecteurs électriques de l'emboîture (6) pour fournir du courant électrique par le biais d'un ensemble formant raccord entre l'emboîture (6) et le bouchon (4), dans lequel le bouchon (4) est formé à partir de deux parties (44, 46), une partie avant (44) comportant une face avant (16) du bouchon (4), ayant le bout mâle (10) formé d'un seul tenant dessus et ayant les connecteurs électriques (12) montés dedans, et une partie arrière (46), l'élément de verrouillage (26) étant situé à l'intérieur d'un ou de plusieurs canaux de guidage définis entre lesdites deux parties (44, 46), le bout mâle (10) s'étendant depuis la face avant (16), **caractérisé en ce que** les connecteurs électriques (12) sont mis en œuvre sur la face avant (16).

2. Bouchon selon la revendication 1, dans lequel la voie de passage (38) se termine dans un prolongement approprié à des fins de raccordement à un conduit.

3. Bouchon selon l'une quelconque des revendications 1 à 2, dans lequel le cliquet (28) s'étend vers l'avant depuis une première extrémité de l'élément de verrouillage (26), le cliquet (28) ayant une partie avant en forme de crochet adaptée pour se mettre en prise avec une partie de l'emboîture (6).

4. Bouchon selon la revendication 3, dans lequel une face extérieure (32) du cliquet (28) est conique ou va en s'inclinant pour guider le cliquet (28) sur une bride de l'emboîture (6) alors que le bouchon (4) est inséré dans l'emboîture (6).

5. Bouchon selon l'une quelconque des revendications 1 à 4, dans lequel l'élément de verrouillage (26) incorpore une ouverture, ou un espace, dans celui-ci au travers de laquelle la voie de passage (38) passe.

6. Ensemble formant raccord (2) approprié pour une alimentation en eau, ledit ensemble formant raccord comportant un bouchon (4) selon l'une quelconque des revendications précédentes et une emboîture (6), ledit bouchon (4) étant en mesure d'être reçu à l'intérieur de ladite emboîture (6), ledit bouchon et ladite emboîture ayant des parties mâle et femelle respectives interchangeables de manière coulissante, une ouverture de réception mise en œuvre sur l'emboîture (6) pour recevoir le bout mâle (10) du bouchon (4) quand le bouchon (4) est mis en prise avec l'emboîture (6), l'élément de verrouillage (26) étant en mesure d'être mobile entre ses positions de fonctionnement et rétractée dans une direction transversale par rapport à la direction de mise en prise du bout mâle (10) avec l'ouverture de réception, le cliquet (28) de l'élément de verrouillage (26) du bouchon (4) étant adapté à des fins de mise en prise d'un bord d'une bride (14) mise en œuvre sur l'emboîture (6) pour retenir le bout mâle (4) à l'intérieur de l'ouverture de réception, dans lequel le cliquet (28) se met en prise avec la bride (14) de l'emboîture (6) pour retenir le bouchon (4) à l'intérieur de l'emboîture (6) quand l'élément de verrouillage (26) est dans sa position de fonctionnement, et dans lequel le cliquet (28) est espacé par rapport à la bride (14) de l'emboîture (6) pour permettre le retrait du bouchon (4) en provenance de l'emboîture (6) quand l'élément de verrouillage (26) est dans sa position rétractée.

7. Ensemble formant raccord selon la revendication 6, dans lequel le moyen de sollicitation comporte un ressort (36).
